# EUROPEAN PATENT SPECIFICATION

(11) **EP 2 862 403 B1**
(45) Date of publication and mention of the grant of the patent: **25.10.2017**
(21) Application number: 12727860.4
(22) Date of filing: 15.06.2012
(51) Int. Cl.: H04W 72/12, H04W 52/32, H04W 52/56, H04W 52/14, H04W 52/44

(54) **MITIGATING GHOST SIGNALLING EFFECTS IN RADIO SYSTEMS**
ABSCHWÄCHUNG VON GEISTERSIGNALISIERUNGSEFFEKTEN IN FUNKSYSTEMEN
ATTÉNUATION DES EFFETS DE SIGNAUX FANTÔMES DANS DES SYSTÈMES RADIO

(43) Date of publication of application: 22.04.2015
(73) Proprietor: Telefonaktiebolaget LM Ericsson (publ), 164 83 Stockholm (SE)
(72) Inventor: ANKEL, Pär, S-449 36 Nödinge (SE)
(74) Representative: Ericsson
(86) International application number: PCT/EP2012/061392
(87) International publication number: WO 2013/185833

(56) References cited:
- US-A1- 2011 128 926
- "3rd Generation Partnership Project; Technical Specification Group Radio Access Network; Enhanced uplink; Overall description; Stage 2 (Release 11)", 3GPP STANDARD; 3GPP TS 25.319, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.3.0, 12 March 2012 (2012-03-12), pages 1-83, XP050580011, [retrieved on 2012-03-12] cited in the application

## Description

### Technical field

This invention is directed to uplink resource handling signalling for user entities, base stations and networks. More particularly, the invention relates to systems and methods where the uplink rate is regulated by the base station by specific downlink signalling, such as a base station being adapted for transmitting an absolute grant signal on a control channel for a transmission time interval, for allowing a user entity to transmit an up-link transmission at a granted data rate on a corresponding transmission time interval.

### Background

Release 11 of the WCDMA (Wideband Code Division Multiple Access) specification - for instance in prior art document 3GPP TS 25.319, "Enhanced Uplink; Overall Description; Stage 2", Version V11.3.0, 2012-03-14 - discloses an Enhanced Uplink also denoted High Speed Uplink Packet Access (HSUPA) communication scheme. The HSUPA aims to match the bit rates provided by the downlink High Speed Data Packet Access (HSDPA) scheme, so as to cater for improved interactive, background and streaming services.

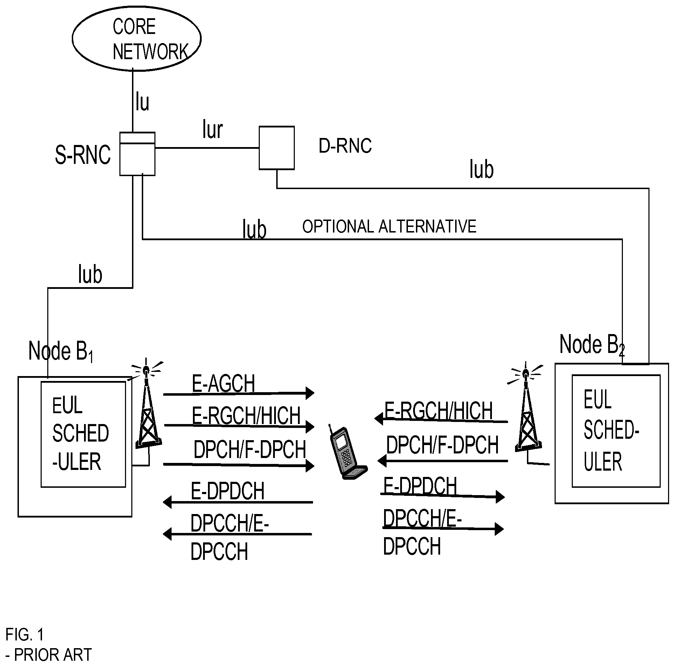

In fig. 1, a HSUPA network overview is indicated (HSDPA related channels are not included in the figure). The network comprises a Core Network communicating with a Radio Network Controller (RNC, S-RNC, D-RNC (Drifting-RNC)) over the lu interface, or lur interface; a first base station, Node B, B1, a second base station, Node B, B2, both base stations comprising a EUL scheduler unit. The EUL Scheduler (EUL_SCH) is also denoted the MAC-e Scheduler, and communicating with the RNC over respective lub interfaces.

The following HSUPA channels are transmitted over the air interface; the E-AGCH to convey absolute grant signalling from the MAC-e scheduler towards the UEs, the E-RGCH for relative grant signalling, E-HICH to convey acknowledgement feedback from Node-B decoding of UE transmitted data, Dedicated Physical Channel (DPCH) or Fractional DPCH to convey Transmit Power Control (TPC) commands, Enhanced DPDCH (E-DPDCH) to convey the MAC-e payload and Enhanced DPCCH (E-DPCCH) to convey the control signalling of the MAC-e.

Node B1 corresponds to the serving cell in this example (E-AGCH is only transmitted from the serving cell) and node B2 corresponds to a non-serving cell.

According to the HSUPA specification, the Enhanced Dedicated Channel (E-DCH) high speed uplink transport channel offers a number of features such as: short Transmission Time Interval (TTI), Fast Hybrid Automatic Repeat Request (ARQ) with soft recombining, fast scheduling for reduced delays, increased data rates and increased capacity.

When a UE is setting up communication with a Node B, the setup procedure may be followed by a HSDPA session, for e.g. downloading / surfing an internet page using TCP. Depending on the capabilities of the user entity, this may moreover involve HSUPA transmissions whereby the Node B that transmits TCP messages on the HSDPA downlink channel will receive TCP acknowledgements on the E-DCH uplink to Node B. Since Node-B determines, or schedules, at which pace a UE shall transmit on E-DCH, Node-B utilises the E-AGCH to convey scheduling decisions. A shorter delay, measured from the time until a TCP data segment is sent downlink until a TCP acknowledgement is sent on the uplink as a response, leads to a decreased downloading time of file transfers etc. due to the shorter round trip time estimate of the TCP layer.

In order to use a HSUPA service with Node B, the user entity is informed about which E-AGCH code it is supposed to receive downlink traffic on. For this purpose, the E-AGCH, which is a shared channel within the cell, is used. The E-AGCH can be defined to have a number of one to several channelization codes.

An E-DCH Radio Network Temporary Identifier is allocated by NodeB upon UE establishing an E-DCH (Enhanced UL DCH) channel. The E-DCH RNTI allocated to a UE / UE group shall be unique within the cell carrying the E-DCH.

E-AGCH channels are configured to a Node B in a configuration or re-configuration procedure with the RNC via the NBAP (Node B Application Part) signalling protocol.

HSUPA is similar in many respects to HSDPA. However, unlike HSDPA, HSUPA does not utilize a shared channel for data transfer in the uplink. In W-CDMA, each UE already uses a unique scrambling code in the uplink so each UE already has a dedicated uplink connection to the network with more than ample code channel space in that connection. This is in contrast to the downlink where the Node B uses a single scrambling code and then assigns different OVSF channelization codes to different UE's. The shared resource in the uplink is actually the interference level at the Node B, which the network manages through the fast closed loop power control algorithm. The fact that the UE has a dedicated connection to the network in the uplink influences the design of HSUPA quite considerably. The goals of HSUPA were to support fast scheduling (which allows the network to rapidly effect a change of which UE's that should transmit and at what rate) and to reduce the overall transmission delay. Transmission delay reduction is achieved through fast HARQ (hybrid automatic repeat request) retransmissions, in a manner very similar to HSDPA and at an optional shorter 2 ms TTI. As the primary shared resource on the uplink is the total power arriving at the base station, HSUPA scheduling is performed by directly controlling the maximum amount of power that a UE can use to transmit with at any given point in time.

The network has two methods for controlling the UE's transmit power on the E-DPDCH; it can either use a non-scheduled grant or a scheduled grant. In the non-scheduled grant the network simply tells the UE the maximum block size that it can transmit on the E-DCH during a TTI. This block size is signalled at call setup and the UE can then transmit a block of that size or less in each TTI until the call ends or the network modifies the non-scheduled grant via an RRC reconfiguration procedure. The block size deterministically maps to a power level, which is also configured by the network during call setup. The non-scheduling grant is most suited for constant-rate delay-sensitive application such as voice-over-IP.

Regarding the scheduled grant, the UE maintains a Serving Grant that it updates based on information received from the network. The Serving Grant directly specifies the maximum power that the UE can use on the E-DPDCH in the current TTI. As E-DCH block sizes map deterministically to power levels, the UE can translate its Serving Grant to the maximum E-DCH block size it can use in a TTI (the mapping of power levels is determined by the E-TFCI (The E-TFCI (E-DCH Transport Format Combination Identifier) includes information about the transport block set size, which is related to the data rate) Reference Power Offsets that are signalled at call setup).

There are two ways the network can control the UE's Serving Grant. The first is through an absalute grant, transmitted on the shared E-AGCH downlink channel, which signals a specific, absolute number for the Serving Grant. The other way is through relative grants, transmitted using the downlink E-RGCH channels, that incrementally adjust a UE's Serving Grant up or down from its current value. At any given point in time, the UE will be listening to a single E-AGCH from its serving cell and to one or more E-RGCH's. The E-AGCH is a shared channel so the UE will only update its Serving Grant if it receives a block on the E-AGCH that is destined for it (the E-RNTI identity signalled at call setup is used on the E-AGCH to direct transmissions to particular UE's). The E-AGCH transmission contains an Absolute Grant Value and an Absolute Grant Scope. The value corresponds to a maximum rate and the scope can be set to either "all HARQ processes" or "per HARQ process". The E-RGCH is also shared by multiple UEs, but on this channel the UE is listening for a particular orthogonal signature rather than a higher layer identity. If it does not detect its signature in a given TTI, it interprets this as a "Hold" command and thus makes no change to its Serving Grant.

Since bandwidth needs vary dynamically over time, it is desirable that the power emissions by user entities are regulated speedily so that bandwidth is not unnecessarily wasted. User entities transmit requests as Happy / Not Happy concerning their need for higher speeds.

There is a risk that an UE falsely detects an absolute grant that was not transmitted, also called a ghost grant. Such a ghost grant may cause the UE to transmit on a rate that the NodeB is not ready to receive at.

Prior art document US2011/0128926A1 discloses a method for a HSUPA scheduler and notes that the primary task of the scheduler is to optimize the per-cell throughput while managing the link latency from each UE and the total rise-over-thermal (RoT) at a cell. The method involves regulating a number of "high grants" and "minimum grants" in a cell and the opportunity to finely balance the total cell throughput, the maximum number of users that can be concurrently supported, and the latency for low rate traffic.

The HSPUA scheduler provides the ability to detect and recover from a situation where an UE has made an error in interpreting its available grant. In the absence of the mechanisms that are present in the scheduler of the present invention, when a UE misinterprets its grant to comprise a higher value than the allocated amount, a very sudden interference in the network may occur, leading to dropped calls and other adverse consequences in the network. However, since the scheduler of the present invention has to only manage a single high-grant user, the detection and recovery mechanisms are greatly simplified despite the above-mentioned constraints on the AGCH. For example, based on the Transport Format Combination Identifier (E-TFCI) transmitted by a UE that was allocated a minimum grant, the scheduler may determine if the UE has falsely decoded a high-grant, and if so, quell that UE by re-sending a minimum-grant to prevent an RoT spike.

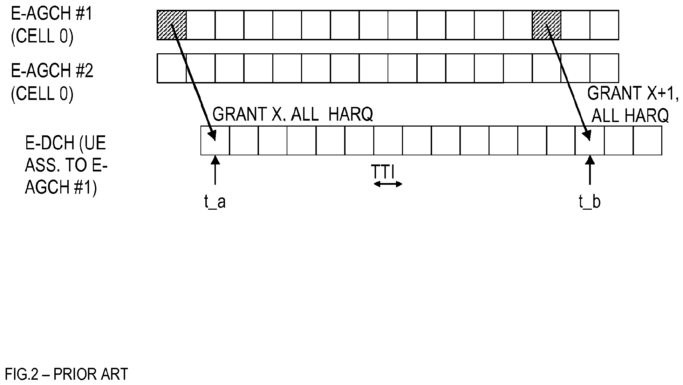

Fig. 2 shows the E-AGCH - E-DCH relation. It is noted that more E_AGCH channels (E-AGCH#1; E-AGCH#2) may be provided for a cell (Cell 0). If we look at a UE assigned to E-AGCH#1, from instance t_a, where an absolute grant, value X, (All HARQ) is received, the UE can use the maximum grant X, until further notice, At a following instance, t_b, the UE may use the maximum grant, X+1, (All HARQ) until further notice. However re-transmissions are allowed on grant X until they "time out".

The inventors have found that according to the current standardized specification - which is not the only background field the invention is directed - Node B will in such situation where a ghost grant is detected by the UE; send a NACK on E-HICH, if it can not be decoded. It will also send a new Absolute Grant to avoid the problem for new UE transmissions. However, the 3GPP standard allows for the UE to re-transmit at a previous grant level, c.f. fig. 2. When no change is needed, nothing is transmitted on the E-AGCH, so typically there is a lot of DTX on the E-AGCH channels. A ghost grant at the highest level (AG index 31) may appear. This is not so unlikely because - depending on parameter settings - several of the AG Indexes can map towards the highest level. Such a ghost grant will cause a huge power increase in the cell causing massive interference. This will disturb the decoding of the other UEs. Since Node B may have no resources to decode transmissions or because of high interference, it may also fail and a new NACK is sent. This will go on until the maximum allowed number of re-transmissions are reached (e.g. 7) which will cause a substantial amount of interference in the cell. Eventually, the UE will give up and stop transmitting, which subsequently will lead to an upper layer RLC (Radio Link Control layer) re-transmission. Additionally, neighbouring cells are impacted by the increased interference.

According to the inventors, the risk for a false detection of E-AGCH, for a 2ms TTI UE can be assessed as follows: In one minute there are 30.000 TTIs. With 16 bit CRC (Cyclic Redundancy Check) there are 65.536 combinations. In lab and field tests, one typically experiences a false E-AGCH (E-AGCH: E-DCH Absolute Grant Channel) detection in a UE in the interval of a few minutes.

### Summary

It is a first object of the invention to minimize the detection of "ghost signals" in user entities, UEs.

This object has been achieved by a method in a base station, adapted for scheduling and receiving uplink transmissions from user entities, UEs, in a cell and further forwarding data related to such transmissions to a core network. The base station is being adapted for transmitting an absolute grant signal on a control channel for a transmission time interval, for allowing a user entity to transmit an up-link transmission at a granted data rate on a corresponding transmission time interval. The method comprises the steps, for a transmission time interval on the control channel, of
- if an absolute grant is scheduled, transmitting the absolute grant;
- if an absolute grant is not scheduled, that is, being indicative of a situation in which no change in absolute grant is needed, investigating whether at least one UE in the cell is configured for receiving on the control channel, and if this is not the case, refraining from transmitting (DTX);

Moreover
- if an absolute grant is not scheduled that is, being indicative of a situation in which no change in absolute grant is needed, and at least one UE in the cell is configured for receiving on the control channel, method comprises either
- the step of - transmitting an absolute grant for a non-configured UE in the cell; or
- the steps of - selecting an arbitrary configured UE in the cell, that is, using a UE identifier that is not allocated to any UE / UE group in the cell; and - transmitting an absolute grant, which was previously transmitted at an earlier transmission time interval, to the selected UE.

The above object has further been achieved by a base station comprising a scheduler (SCH) adapted for scheduling and receiving uplink transmissions from user entities, UEs, in a cell and further forwarding data related to such transmissions to a core network; the base station being adapted for transmitting an absolute grant signal on a control channel for a transmission time interval, for allowing a user entity to transmit an up-link transmission at a granted data rate on a corresponding transmission time interval. The base station is being further adapted for - for a transmission time interval on the control channel - if an absolute grant is scheduled, transmitting the absolute grant;
- if an absolute grant is not scheduled, investigating whether at least one UE in the cell is configured for receiving on the control channel, and if this is not the case, refraining from transmitting (DTX);and
- if an absolute grant is not scheduled and at least one UE in the cell is configured for receiving on the control channel.

The base station being adapted for carrying out one of the following two options at a time, a) and b):
a) - transmitting an absolute grant for a non-configured UE in the cell; and
b) - selecting an arbitrary configured UE in the cell; and - transmitting an absolute grant, which was previously transmitted at an earlier transmission time interval, to the selected UE.

By ensuring that "something" is transmitted on the E-AGCHs, rather than performing a discontinuous transmission, DTX, under the various conditions specified, UEs are enabled to detect the channel and derive a cyclic redundancy check, CRC, that do not match in case the specific transmission is not addressed to the UE's in question. By signalling above the noise floor, this lowers the risk of detecting so-called "ghost grants". The rate of ghost grant detection in UE's are consequently lowered according to the invention.

A further object of the invention is to minimize the detection of ghosts in user entities, UEs wile limiting downlink power consumption.

According to a further aspect of the invention the transmission of an absolute grant for a non-configured identity for a UE or the transmission of an absolute grant which was previously transmitted at an earlier transmission time interval, is
- performed at a reduced power level in relation to the power level at which a scheduled absolute grant is transmitted.

### Brief description of the drawings

- Fig. 1: shows basic elements of a prior art HSUPA network and signalling,
- fig. 2: shows a channel relationship of the prior art,
- fig. 3: shows an exemplary occurrence of a "ghost grant", i.e. an erroneously detected grant,
- fig. 4: shows aspects of an internal reference design of the applicant,
- fig. 5: shows a first embodiment of a method according to the invention,
- fig. 6: shows a second embodiment of a method according to invention,
- fig. 7: shows a third embodiment of a method according to invention, and
- fig. 8: shows an exemplary base station according to the invention.

### Detailed description

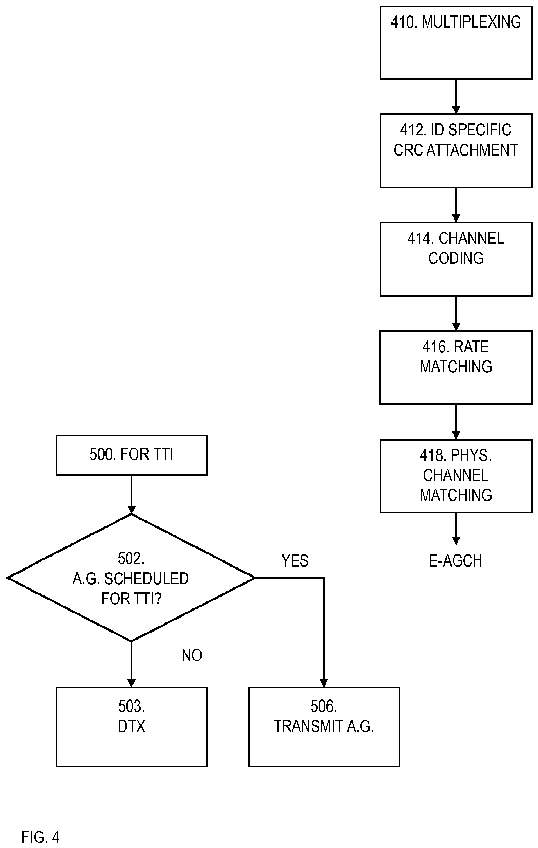

Fig. 4 show elements of a non-public reference design relating to the radio coding for the E-AGCH channel. In step 410 absolute grant values per HARQ or all HARQ as well as a HARQ scope value are input in a multiplexing stage 410. From the multiplexing stage an ID specific CRC attachment is performed. A UE specific identifier called E-RNTI is used to create a 16 bit cyclic redundancy check, CRC, see 3GPP 25.212, v11.1.0; Multiplexing and channel coding (FDD); chapters 4.2.1 and 4.10. Thereafter, channel coding 414, physical rate matching 416, and finally physical channel matching are defined for the absolute grant signals to be transmitted on the E-AGCH channel.

The functionality of the prior art can be interpreted as per each individual transmission time interval, TTI, 500; the scheduler investigates whether an absolute grant is scheduled for the TTI in question. If yes, the absolute grant is transmitted, 506, and if no the transmission is discontinued, DTX, 503.

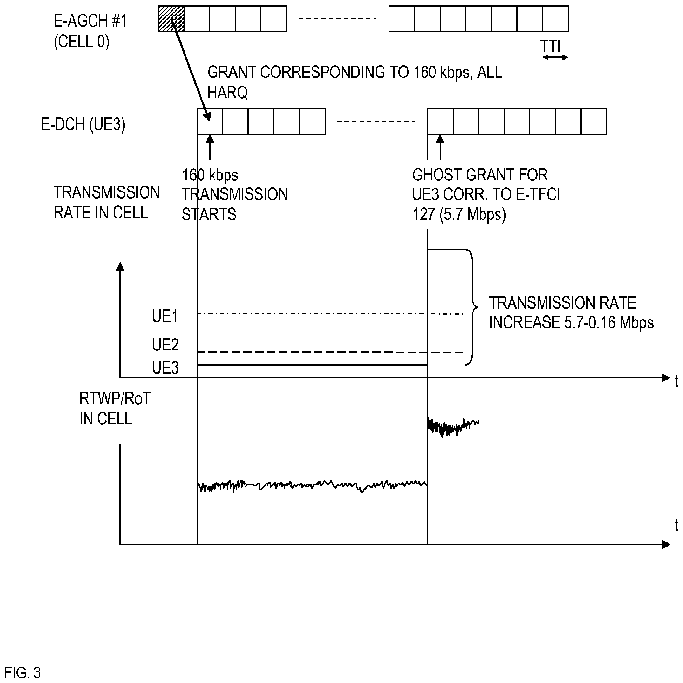

In fig. 3, the effects of such E-AGCH handling are shown. For a cell denoted Cell 0 an absolute grant is transmitted providing for an up-link bit-rate of 160 kbps for UE3 on the E-DCH channel. As shown n the figure, other UE's, UE1 and UE2, in the cell may transmit at comparatively higher levels than UE3. At a following TTI, a ghost grant is falsely detected in UE3 perceiving a bit rate 5,7 Mbps, increased from 0,16 Mbps. An incremental large increase in the rise over thermal, RoT, or Received Total Wideband Power, RTWP, level is experienced in the cell.

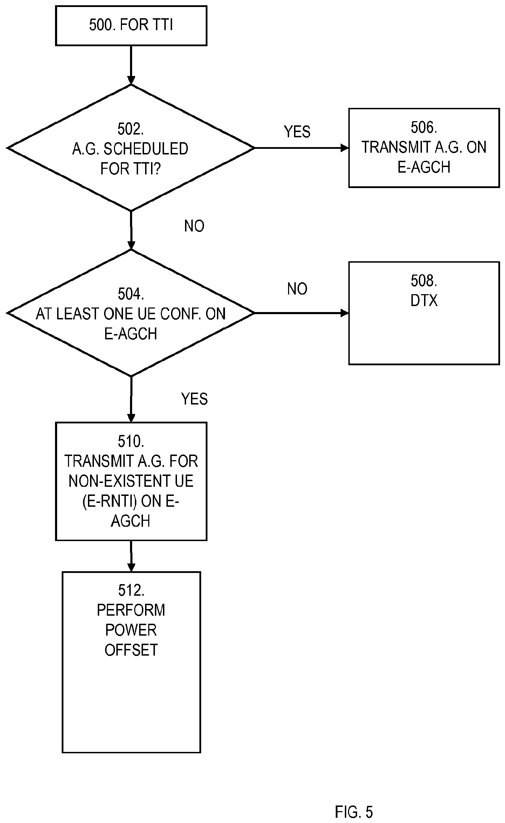

In fig. 5, is shown a first embodiment of a method according to the invention in a base station adapted for scheduling and receiving uplink transmissions from user entities, UEs, in a cell and further forwarding data related to such transmissions to a core network.

The base station is adapted for transmitting an absolute grant signal on a control channel, E-AGCH, for allowing a user entity to transmit an up-link transmission at a granted data rate on a corresponding transmission time interval 500 on the control channel. In case more control channels are provided, the method may be carried out for each control channel.

The method comprises the steps 502, 504, 506, 508, 510 for a transmission time interval, step 500:
In step 502 it is investigated whether an absolute grant is scheduled. If so, the base station is transmitting 506 the absolute grant on the control channel.

If an absolute grant is not scheduled in 502, an investigation is made, step 504 as to whether at least one UE in the cell is configured for receiving on the control channel E-AGCH, and if this is not the case, it is refraining from transmitting anything, i.e. the base station is performing a discontinuous transmission, DTX.

If, on the other hand, an absolute grant is not scheduled 502 and at least one UE in the cell is configured for receiving 504 on the control channel, E-AGCH - the method is transmitting 510 an absolute grant for a non-configured UE in the cell.

By insuring that "something" is transmitted on the E-AGCHs, rather than performing a discontinuous transmission, DTX, under the various conditions specified, UEs are enabled to detect the channel and derive a cyclic redundancy check, CRC, that do not match in case the specific transmission is not addressed to them. By signalling above the noise floor, this lowers this risk of detecting so-called "ghost grants". The rate of ghost grant detection in UE's are consequently lowered according to the invention.

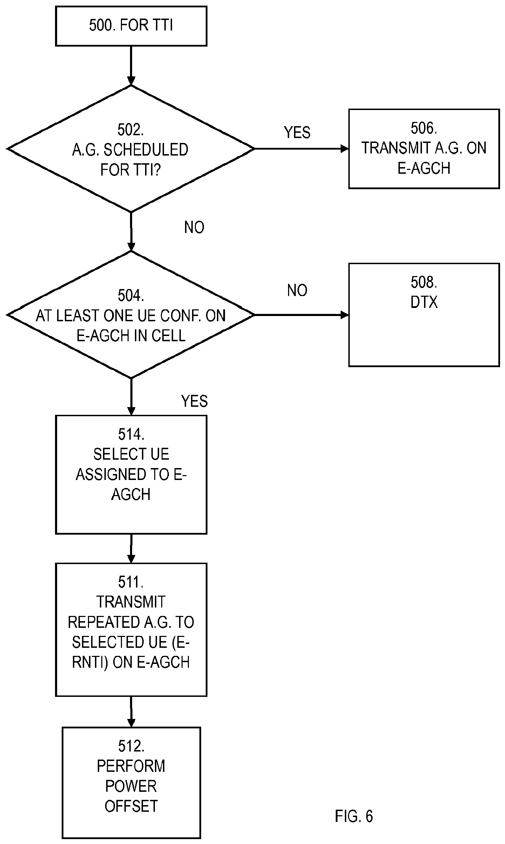

In fig. 6 an alternative embodiment is shown, where step 510 is replaced by steps 514 and 511. Method steps with same references as above have the same content and will not be repeated.

Hence, if an absolute grant is not scheduled and at least one UE in the cell is configured for receiving 504 on the control channel E-AGCH, the method is carrying out the steps of - selecting 514 an arbitrary configured UE in the cell; and - transmitting 511 an absolute grant, which was previously transmitted at an earlier transmission time interval, i.e. repeating the grant, to the selected UE.

This embodiment is beneficial for isolated single cell uses which have the property of not providing soft handover, HO. Transmitting repeated absolute grants to selected UE's can be a problem in soft HO, because a non-serving radio link, RL, might send a relative grant (1 SG (Serving Grant) index down) while the repeated AG can increase the grant.

According to a further embodiment of the invention, a power offset step 512, shown in figs. 5, 6 and 7 is performed for the transmissions in step 510 and 511. It is found, according to the invention, that e.g. a reduced value, e.g. 3 dB lower, may be sufficient to avoid false E-AGCH detections in relation to using the power level for transmitting absolute grants in e.g. step 506 on the transmission in steps 511 and 510. In practice, reduced values of 2 dB may suffice. Thereby, not more DL power than necessary is used. It is seen that the amount of power level reduction is a trade off. With the reduced power, the rate of false detections is decreasing. However, DL power available for other DL transmissions, so as for HSDPA, will increase.

According to further aspects, the methods of the invention are particularly suitable for systems operating according to High Speed Uplink Packet Access, HSUPA.

The base station may be a NodeB.

The control channel may be an Enhanced Dedicated Channel, E-DCH, Absolute Grant Channel, E-AGCH, channel.

The step of transmitting an absolute grant for a non-configured UE in the cell may correspond to transmitting an absolute grant for an Enhanced Dedicated Channel, E-DCH, Radio Network Temporary Identifier, E-RNTI which is not configured in the cell.

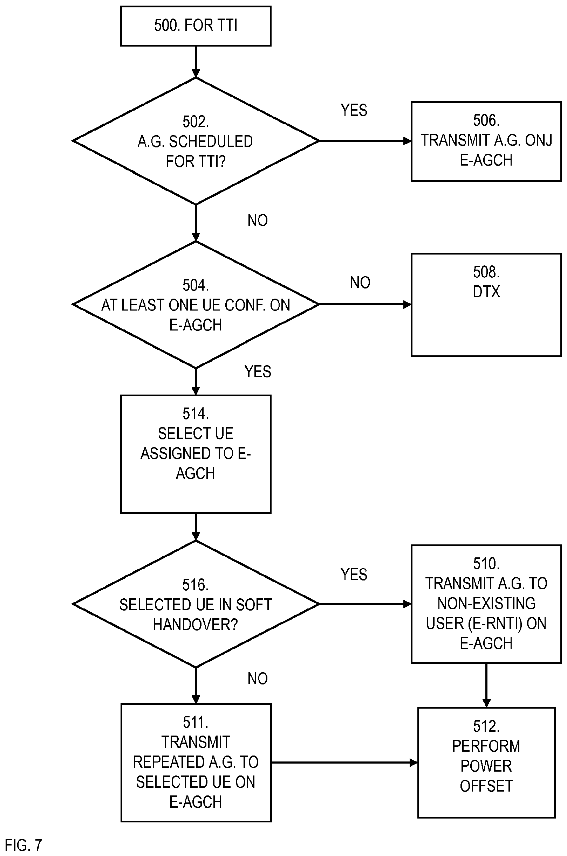

In fig. 7, a further embodiment is shown.

In relation to fig. 6, a further step 516 is checking whether the selected UE is in soft handover. If yes the method moves to step 510 and if no the method moves to step 511. Again, the embodiment may as a further aspect provide a power offset, step 512, following from both steps 510 and 511.

As mentioned above, E-AGCH false detections cause several problems. It leads to additional interference, maybe at very high levels, since ghost signals may appear "on top of" an already loaded cell. Which cause decoding error, block error rate (BLER). Ghost detection in UEs may also lead to decoding problems in NodeB, due to Node B resource constraints. Ghost grants moreover lead to RLC re-transmissions and HARQ failures.

The embodiments of the invention alleviate these problems at the cost of a slightly higher DL power consumption.

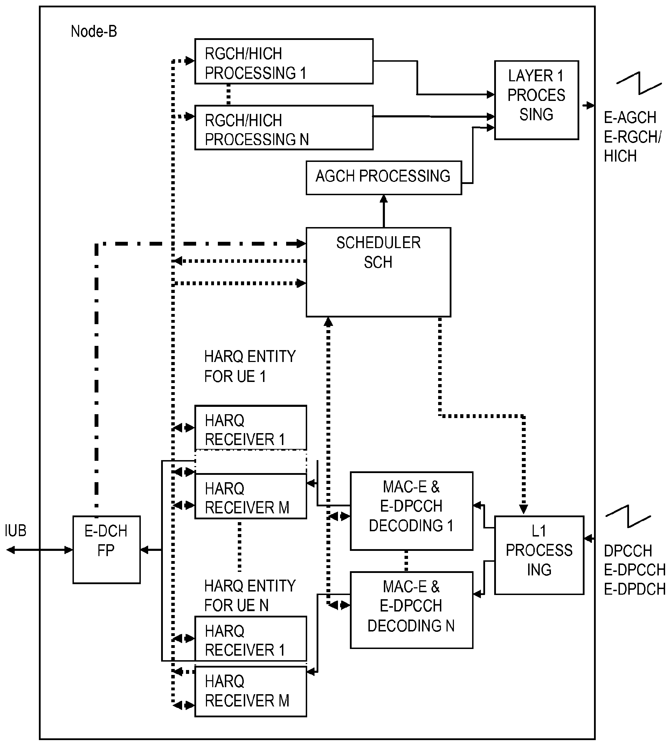

In fig. 8, an exemplary base station according to the invention is shown, also denoted Node B, being capable of operating both as a serving base station and as a non-serving base station.

The base station comprises E-RGCH/HICH processing stages 1 - n, layer 1 processing, E-AGCH processing, a scheduler, SCH, respective HARQ entities for user entities 1 - n, each HARQ entity comprising plurality of HARQ receivers for receiving packets 1 - m according to the HARQ process for each user entity. Node B moreover comprises Layer 1 processing means for communicating over E-AGCH and E-RGCH channels over the air interface, L1 processing means for communicating over DPCCH, E-DPCCH and E-DPDCCH channels. Moreover, the base station comprises E-DPCH FP means for communicating over the iub interface. MAC-e E-DPCCH decoding means 1 - n is provided for HARQ entities for UE 1 - n. According to the invention, the method steps concerning Node B according to the invention may be implemented in the scheduler.

Hence there is provided a base station comprising a scheduler, SCH, adapted for scheduling and receiving uplink transmissions from user entities, UEs, in a cell and further forwarding data related to such transmissions to a core network.
The base station being adapted for transmitting 506 an absolute grant signal on a control channel E-AGCH for a transmission time interval, for allowing a user entity to transmit an up-link transmission at a granted data rate on a corresponding transmission time interval 500.
The base station is further adapted for - for a transmission time interval on the control channel,
- if an absolute grant is scheduled 502, transmitting 506 the absolute grant;
- if an absolute grant is not scheduled 502, investigating 504 whether at least one UE in the cell is configured for receiving on the control channel E-AGCH, and if this is not the case, refraining 508 from transmitting DTX;
- if an absolute grant is not scheduled 502 and at least one UE in the cell is configured for receiving 504 on the control channel E-AGCH, the base station being adapted for carrying out either
   a) - transmitting 510 an absolute grant for a non-configured UE in the cell; or
   b) - selecting 514 an arbitrary configured UE in the cell; and - transmitting 511 an absolute grant, which was previously transmitted at an earlier transmission time interval, to the selected UE.

For the case the base station being adapted to - selecting 514 an arbitrary configured UE in the cell and transmitting 511 an absolute grant which was previously transmitted at an earlier transmission time interval to the selected UE; the base station is being further adapted for
- investigating 516 whether the selected UE is in soft handover, and if so - transmitting 511 an absolute grant which was previously transmitted at an earlier transmission time interval to the selected UE - and otherwise - transmitting 510 an absolute grant for a non-configured UE in the cell on the control channel.

According to a further aspect the transmission 510 of an absolute grant for a non-configured UE in the cell or the transmission of 511 an absolute grant which was previously transmitted at an earlier transmission time interval, is
- performed 512 at a reduced power level in relation to the power level at which a scheduled 502 absolute grant 506 is transmitted.

According to an embodiment, the reduced power level is at least 2 dB below the level at which a scheduled 502 absolute grant 506 is transmitted.

Moreover, the base station may be adapted for operating according to High Speed Up-link Packet Access, HSUPA. The base station could be a so-called NodeB. The control channel could be constituted by a Enhanced Dedicated Channel, E-DCH, Absolute Grant Channel, E-AGCH, channel; and the base station could according to an embodiment be adapted for transmitting an absolute grant for a non-configured UE in the cell corresponds to the base station being adapted for transmitting an absolute grant for an Enhanced Dedicated Channel, E-DCH, Radio Network Temporary Identifier, E-RNTI which is not allocated to any UE/ UE group in the cell.

## Claims

1. A method performed by a base station, adapted for scheduling and receiving uplink transmissions from user entities, UEs, in a cell and further forwarding data related to such transmissions to a core network;
the base station being adapted for transmitting (506) an absolute grant signal on a control channel (E-AGCH) for a transmission time interval, TTI (500), for allowing a user entity to transmit an up-link transmission at a granted data rate on a corresponding up-link transmission time interval; wherein the method comprises the steps for said transmission time interval (500) on the control channel,
- if an absolute grant is scheduled (502), transmitting (506) the absolute grant; the method being **characterized in that**
- if an absolute grant is not scheduled (502), that is, being indicative of a situation in which no change in absolute grant is needed, investigating (504) whether at least one UE in the cell is configured for receiving an absolute grant on the control channel (E-AGCH), and if this is not the case, refraining (508) from transmitting anything;
- if an absolute grant is not scheduled (502), that is, being indicative of a situation in which no change in absolute grant is needed, and at least one UE in the cell is configured for receiving (504) an absolute grant on the control channel (E-AGCH), the method comprising either
the step of - transmitting (510) an absolute grant for a non-configured UE in the cell, that is, using a UE identifier that is not allocated to any UE or UE group in the cell;
or
the steps of- selecting (514) an arbitrary configured UE in the cell; and - transmitting (511) an absolute grant, which was previously transmitted at an earlier transmission time interval, to the selected UE.

2. Method according to claim 1, wherein
for the case the method comprises the steps of - selecting (514) an arbitrary configured UE in the cell and transmitting (511) an absolute grant which was previously transmitted at an earlier transmission time interval to the selected UE; the method comprising the further steps of
- investigating (516) whether the selected UE is in soft handover, and if so - transmitting (511) an absolute grant which was previously transmitted at an earlier transmission time interval to the selected UE - and otherwise - transmitting (510) an absolute grant for a non-configured UE in the cell on the control channel.

3. Method according to claim 1 or 2, wherein
the transmission (510) of an absolute grant for a non-configured UE in the cell or the transmission of (511) an absolute grant which was previously transmitted at an earlier transmission time interval, is
- performed (512) at a reduced power level in relation to the power level at which a scheduled (502) absolute grant (506) is transmitted.

4. Method according to claim 3, wherein the reduced power level is at least 2 dB below the level at which a scheduled (502) absolute grant (506) is transmitted.

5. Method according to any previous claim wherein, at least
- the method is adapted for operating according to High Speed Uplink Packet Access, HSUPA;
- the base station is a NodeB;
- the control channel is a Enhanced Dedicated Channel, E-DCH, Absolute Grant Channel, E-AGCH, channel; and
- the step of transmitting an absolute grant for a non-configured UE in the cell corresponds to transmitting an absolute grant for an Enhanced Dedicated Channel, E-DCH, Radio Network Temporary Identifier, E-RNTI which is not allocated to any UE or UE group in the cell.

6. A base station comprising a scheduler (SCH) adapted for scheduling and receiving uplink transmissions from user entities, UEs, in a cell and further forwarding data related to such transmissions to a core network;
the base station being adapted for transmitting (506) an absolute grant signal on a control channel (E-AGCH) for a transmission time interval, TTI (500), for allowing a user entity to transmit an up-link transmission at a granted data rate on a corresponding up-link transmission time interval; the base station being further adapted for for said transmission time interval (500) on the control channel,
- if an absolute grant is scheduled (502), transmitting (506) the absolute grant; the base station **characterized in that** being further adapted to perform
- if an absolute grant is not scheduled (502), that is, being indicative of a situation in which no change in absolute grant is needed, investigating (504) whether at least one UE in the cell is configured for receiving an absolute grant on the control channel (E-AGCH), and if this is not the case, refraining (508) from transmitting anything;
- if an absolute grant is not scheduled (502), that is, being indicative of a situation in which no change in absolute grant is needed, and at least one UE in the cell is configured for receiving (504) an absolute grant on the control channel (E-AGCH), the base station being adapted for carrying out either
- transmitting (510) an absolute grant for a non-configured UE in the cell, that is, using a UE identifier which is not allocated to any UE or UE group in the cell; or
- selecting (514) an arbitrary configured UE in the cell; and - transmitting (511) an absolute grant, which was previously transmitted at an earlier transmission time interval, to the selected UE.

7. Base station according to claim 6, wherein
for the case the base station being adapted to - selecting (514) an arbitrary configured UE in the cell and transmitting (511) an absolute grant which was previously transmitted at an earlier transmission time interval to the selected UE; the base station being further adapted for
- investigating (516) whether the selected UE is in soft handover, and if so - transmitting (511) an absolute grant which was previously transmitted at an earlier transmission time interval to the selected UE - and otherwise - transmitting (510) an absolute grant for a non-configured UE in the cell on the control channel.

8. Base station according to claim 6 or 7, wherein
the transmission (510) of an absolute grant for a non-configured UE in the cell or the transmission of (511) an absolute grant which was previously transmitted at an earlier transmission time interval, is
- performed (512) at a reduced power level in relation to the power level at which a scheduled (502) absolute grant (506) is transmitted.

9. Base station according to claim 8, wherein the reduced power level is at least 2 dB below the level at which a scheduled (502) absolute grant (506) is transmitted.

10. Base station according to any previous claim 6 - 9, wherein, at least
- the base station is adapted for operating according to High Speed Uplink Packet Access, HSUPA;
- the base station is a NodeB;
- the control channel is a Enhanced Dedicated Channel, E-DCH, Absolute Grant Channel, E-AGCH, channel; and
- the base station being adapted for transmitting an absolute grant for a non-configured UE in the cell corresponds to the base station being adapted for transmitting an absolute grant for an Enhanced Dedicated Channel, E-DCH, Radio Network Temporary Identifier, E-RNTI which is not allocated to any UE or UE group in the cell.

## Patentansprüche

1. Verfahren, das durch
eine Basisstation durchgeführt wird, die dazu ausgelegt ist, Aufwärtsstrecken-Übertragungen von Benutzereinheiten, UEs, in einer Zelle zu planen und zu empfangen und Daten im Zusammenhang mit derartigen Übertragungen zu einem Kernnetzwerk weiterzuleiten;
wobei die Basisstation dazu ausgelegt ist, ein absolutes Genehmigungssignal für ein Übertragungszeitintervall, TTI, (500) auf einem Steuerkanal (E-AGCH) zu senden (506), um einer Benutzereinheit zu gestatten, in einem entsprechenden Aufwärtsstrecken-Übertragungszeitintervall eine Aufwärtsstrecken-Übertragung mit einer genehmigten Datenrate zu senden;
wobei das Verfahren für das Übertragungszeitintervall (500) auf dem Steuerkanal die folgenden Schritte umfasst:
- Senden (506) der absoluten Genehmigung, wenn eine absolute Genehmigung geplant (502) ist,
- wobei das Verfahren **dadurch gekennzeichnet ist,**
- **dass** dann, wenn keine absolute Genehmigung geplant (502) ist, das heißt, eine Situation angezeigt wird, in der keine Änderung bei der absoluten Genehmigung nötig ist, untersucht (504) wird, ob wenigstens eine UE in der Zelle zum Empfang einer absoluten Genehmigung auf dem Steuerkanal (E-AGCH) konfiguriert ist, und wenn dies nicht der Fall ist, jegliche Sendung unterlassen (508) wird;
- und das Verfahren dann, wenn keine absolute Genehmigung geplant (502) ist, das heißt, eine Situation angezeigt wird, in der keine Änderung bei der absoluten Genehmigung nötig ist, und wenigstens eine UE in der Zelle zum Empfang (504) einer absoluten Genehmigung auf dem Steuerkanal (E-AGCH) konfiguriert ist, entweder den Schritt des Sendens (510) einer absoluten Genehmigung für eine nicht konfigurierte UE in der Zelle, das heißt, des Verwendens einer UE-Kennung, die keinerlei UE oder UE-Gruppe in der Zelle zugeteilt ist;
oder
die Schritte des Wählens (514) einer beliebigen konfigurierten UE in der Zelle; und des Sendens (511) einer absoluten Genehmigung, die vorher in einem früheren Übertragungszeitintervall gesendet wurde, an die gewählte UE umfasst.

2. Verfahren nach Anspruch 1, wobei
das Verfahren dann, wenn das Verfahren die Schritte des Wählens (514) einer beliebigen konfigurierten UE in der Zelle; und des Sendens (511) einer absoluten Genehmigung, die vorher in einem früheren Übertragungszeitintervall gesendet wurde, an die gewählte UE umfasst, die weiteren Schritte des
- Untersuchens (516), ob sich die gewählte UE bei einem Soft-Handover befindet, und wenn dies der Fall ist, des Sendens (511) einer absoluten Genehmigung, die vorher in einem früheren Übertragungszeitintervall gesendet wurde, an die gewählte UE, oder andernfalls des Sendens (510) einer absoluten Genehmigung für eine nicht konfigurierte UE in der Zelle auf dem Steuerkanal umfasst.

3. Verfahren nach Anspruch 1 oder 2, wobei
das Senden (510) einer absoluten Genehmigung für eine nicht konfigurierte UE in der Zelle oder das Senden (511) einer absoluten Genehmigung, die vorher in einem früheren Übertragungszeitintervall gesendet wurde,
- bei einem verringerten Leistungspegel im Verhältnis zu dem Leistungspegel, bei dem eine geplante (502) absolute Genehmigung (506) gesendet wird, durchgeführt (512) wird.

4. Verfahren nach Anspruch 3, wobei der verringerte Leistungspegel wenigstens 2 dB unter dem Pegel, bei dem eine geplante (502) absolute Genehmigung (506) gesendet wird, liegt.

5. Verfahren nach einem der vorhergehenden Ansprüche, wobei wenigstens
- das Verfahren zum Betrieb gemäß dem High Speed Uplink Packet Access, HSUPA, ausgelegt ist;
- die Basisstation ein NodeB ist;
- der Steuerkanal ein "Enhanced Dedicated Channel, E-DCH, Absolute Grant Channel, E-AGCH"-Kanal ist; und
- der Schritt des Sendens einer absoluten Genehmigung für eine nicht konfigurierte UE in der Zelle dem Senden einer absoluten Genehmigung für eine zeitweilige Funknetzkennung, E-RNTI, des Enhanced Dedicated Channel, E-DCH, die keinerlei UE oder UE-Gruppe in der Zelle zugeordnet ist, entspricht.

6. Basisstation, umfassend einen Scheduler (SCH), der dazu ausgelegt ist, Aufwärtsstrecken-Übertragungen von Benutzereinheiten, UEs, in einer Zelle zu planen und zu empfangen und Daten im Zusammenhang mit derartigen Übertragungen zu einem Kernnetzwerk weiterzuleiten;
wobei die Basisstation dazu ausgelegt ist, ein absolutes Genehmigungssignal für ein Übertragungszeitintervall, TTI, (500) auf einem Steuerkanal (E-AGCH) zu senden (506), um einer Benutzereinheit zu gestatten, in einem entsprechenden Aufwärtsstrecken-Übertragungszeitintervall eine Aufwärtsstrecken-Übertragung mit einer genehmigten Datenrate zu senden;
wobei die Basisstation für das Übertragungszeitintervall (500) auf dem Steuerkanal ferner dazu ausgelegt ist,
- die absolute Genehmigung zu senden (506), wenn eine absolute Genehmigung geplant (502) ist;
- wobei die Basisstation **dadurch gekennzeichnet ist, dass** sie ferner dazu ausgelegt ist, dann, wenn keine absolute Genehmigung geplant (502) ist, das heißt, eine Situation angezeigt wird, in der keine Änderung bei der absoluten Genehmigung nötig ist, eine Untersuchung (504) durchzuführen, ob wenigstens eine UE in der Zelle zum Empfang einer absoluten Genehmigung auf dem Steuerkanal (E-AGCH) konfiguriert ist, und wenn dies nicht der Fall ist, jegliche Sendung zu unterlassen (508);
- und die Basisstation dann, wenn keine absolute Genehmigung geplant (502) ist, das heißt, eine Situation angezeigt wird, in der keine Änderung bei der absoluten Genehmigung nötig ist, und wenigstens eine UE in der Zelle zum Empfang (504) einer absoluten Genehmigung auf dem Steuerkanal (E-AGCH) konfiguriert ist, dazu ausgelegt ist, entweder
- das Senden (510) einer absoluten Genehmigung für eine nicht konfigurierte UE in der Zelle, das heißt, das Verwenden einer UE-Kennung, die keinerlei UE oder UE-Gruppe in der Zelle zugeteilt ist; oder
- das Wählen (514) einer beliebigen konfigurierten UE in der Zelle und das Senden (511) einer absoluten Genehmigung, die vorher in einem früheren Übertragungszeitintervall gesendet wurde, an die gewählte UE vorzunehmen.

7. Basisstation nach Anspruch 6, wobei
die Basisstation dann, wenn die Basisstation dazu ausgelegt ist, eine beliebige konfigurierte UE in der Zelle zu wählen (514); und eine absolute Genehmigung, die vorher in einem früheren Übertragungszeitintervall gesendet wurde, an die gewählte UE zu senden (511), ferner dazu ausgelegt ist,
- zu untersuchen (516), ob sich die gewählte UE bei einem Soft-Handover befindet, und wenn dies der Fall ist, eine absolute Genehmigung, die vorher in einem früheren Übertragungszeitintervall gesendet wurde, an die gewählte UE zu senden (511), oder andernfalls eine absolute Genehmigung für eine nicht konfigurierte UE in der Zelle auf dem Steuerkanal zu senden (510).

8. Basisstation nach Anspruch 6 oder 7, wobei
das Senden (510) einer absoluten Genehmigung für eine nicht konfigurierte UE in der Zelle oder das Senden (511) einer absoluten Genehmigung, die vorher in einem früheren Übertragungszeitintervall gesendet wurde,
- bei einem verringerten Leistungspegel im Verhältnis zu dem Leistungspegel, bei dem eine geplante (502) absolute Genehmigung (506) gesendet wird, durchgeführt (512) wird.

9. Basisstation nach Anspruch 8, wobei der verringerte Leistungspegel wenigstens 2 dB unter dem Pegel, bei dem eine geplante (502) absolute Genehmigung (506) gesendet wird, liegt.

10. Basisstation nach einem der vorhergehenden Ansprüche 6 - 9, wobei wenigstens
- die Basisstation zum Betrieb gemäß dem High Speed Uplink Packet Access, HSUPA, ausgelegt ist;
- die Basisstation ein NodeB ist;
- der Steuerkanal ein "Enhanced Dedicated Channel, E-DCH, Absolute Grant Channel, E-AGCH"-Kanal ist; und
- die Auslegung der Basisstation zum Senden einer absoluten Genehmigung für eine nicht konfigurierte UE in der Zelle einer Auslegung der Basisstation zum Senden einer absoluten Genehmigung für eine zeitweilige Funknetzkennung, E-RNTI, des Enhanced Dedicated Channel, E-DCH, die keinerlei UE oder UE-Gruppe in der Zelle zugeordnet ist, entspricht.

## Revendications

1. Procédé effectué par une station de base, adaptée pour programmer et recevoir des transmissions en liaison montante provenant d'entités utilisateurs UE dans une cellule et acheminant en outre des données se rapportant à ces transmissions à un réseau central ;
la station de base étant à même de transmettre (506) un signal d'autorisation absolue sur un canal de commande (E-AGCH) pour un intervalle de temps de transmission TTI (500) afin de permettre à une entité utilisateur de transmettre une transmission en liaison montante à un débit de données autorisé sur un intervalle de temps de transmission en liaison montante correspondant ;
dans lequel le procédé comprend les étapes consistant à, pour ledit intervalle de transmission (500) sur le canal de commande,
- si une autorisation absolue est programmée (502), transmettre (506) l'autorisation absolue ;
le procédé étant **caractérisé en ce que** :
- si une autorisation absolue n'est pas programmée (502), c'est-à-dire qu'elle est indicative d'une situation dans laquelle aucun changement d'autorisation absolue n'est nécessaire, rechercher (504) si au moins une UE de la cellule est ou non configurée pour recevoir une autorisation absolue sur le canal de commande (E-AGCH) et, si ce n'est pas le cas, s'abstenir (508) de transmettre quoi que ce soit ;
- si une autorisation absolue n'est pas programmée (502), c'est-à-dire qu'elle est indicative d'une situation dans laquelle aucun changement d'autorisation absolue n'est nécessaire et qu'au moins une UE de la cellule est configurée pour recevoir (504) une autorisation absolue sur le canal de commande (E-AGCH), le procédé comprenant :
l'étape de transmission (510) d'une autorisation absolue pour une UE non configurée dans la cellule, c'est-à-dire l'utilisation d'un identifiant d'UE qui n'est pas affecté à une UE ou à un groupe UE quelconque dans la cellule ;
ou
les étapes de sélection (514) d'une UE configurée arbitraire dans la cellule ; et de transmission (511) d'une autorisation absolue, qui a été précédemment transmise dans un intervalle de temps de transmission antérieur, à la UE sélectionnée.

2. Procédé selon la revendication 1, dans lequel :
dans le cas où le procédé comprend les étapes de sélection (514) d'une UE configurée arbitraire dans la cellule et de transmission (511) d'une autorisation absolue qui a été précédemment transmise à un intervalle de temps de transmission antérieur à la UE sélectionnée ; le procédé comprenant les autres étapes consistant à :
- rechercher (516) si la UE sélectionnée est en transfert doux et, le cas échéant, transmettre (511) une autorisation absolue qui a été précédemment transmise à un intervalle de temps de transmission antérieur à la UE sélectionnée et autrement transmettre (510) une autorisation absolue pour une UE non configurée dans la cellule sur le canal de commande.

3. Procédé selon la revendication 1 ou 2, dans lequel :
la transmission (510) d'une autorisation absolue pour une UE non configurée dans la cellule ou la transmission (511) d'une autorisation absolue qui a été précédemment transmise à un intervalle de temps de transmission antérieur est
- effectuée (512) à un niveau de puissance réduit par rapport au niveau de puissance auquel une autorisation absolue (506) programmée (502) est transmise.

4. Procédé selon la revendication 3, dans lequel le niveau de puissance réduit est d'au moins 2 dB en dessous du niveau où une autorisation absolue (506) programmée (502) est transmise.

5. Procédé selon l'une quelconque des revendications précédentes, dans lequel au moins :
- le procédé est à même de fonctionner selon l'accès de paquet en liaison montante à grande vitesse HSUPA ;
- la station de base est un noeud B ;
- le canal de commande est un canal dédié renforcé E-DCH, un canal d'autorisation absolue E-AGCH ; et
- l'étape de transmission d'une autorisation absolue pour une UE non configurée dans la cellule correspond à la transmission d'une autorisation absolue pour un canal dédié renforcé E-DCH, un identifiant temporaire de réseau radio E-RNTI qui n'est pas affecté à une UE ou à un groupe d'UE quelconque dans la cellule.

6. Station de base comprenant un programmeur (SCH) qui est à même de programmer et de recevoir des transmissions en liaison montante d'entités utilisateurs UE dans une cellule et pour acheminer en outre des données se rapportant à ces transmissions à un réseau central ;
la station de base étant à même de transmettre (506) un signal d'autorisation absolue sur un canal de commande (E-AGCH) pendant un intervalle de temps de transmission TTI (500) pour permettre à une entité utilisateur de transmettre une transmission en liaison montante à un débit de données autorisé sur l'intervalle de temps de transmission en liaison montante correspondant ;
la station de base étant en outre à même pendant ledit intervalle de temps de transmission (500) sur le canal de commande,
- si une autorisation absolue est programmée (502), de transmettre (506) l'autorisation absolue ; la station de base étant **caractérisée en ce qu'**elle est en outre à même:
- si une autorisation absolue n'est pas programmée (502), c'est-à-dire qu'elle est indicative d'une situation dans laquelle aucun changement d'autorisation absolue n'est nécessaire, de rechercher (504) si au moins une UE de la cellule est configurée pour recevoir une autorisation absolue sur le canal de commande (E-AGCH) et, si ce n'est pas le cas, de s'abstenir (508) de transmettre quoi que ce soit ;
- si une autorisation absolue n'est pas programmée (502), c'est-à-dire qu'elle est indicative d'une situation dans laquelle aucun changement d'autorisation absolue n'est nécessaire et qu'au moins une UE de la cellule est configurée pour recevoir (504) une autorisation absolue sur le canal de commande (E-AGCH), la station de base étant à même d'effectuer :
- une transmission (510) d'une autorisation absolue pour une UE non configurée dans la cellule, c'est-à-dire en utilisant un identifiant d'UE qui n'est pas affecté à une UE ou un groupe d'UE quelconque dans la cellule ; ou
- la sélection (514) d'une UE configurée arbitraire dans la cellule ; et/ou la transmission (511) d'une autorisation absolue qui a été transmise précédemment à un intervalle de temps de transmission antérieur à la UE sélectionnée.

7. Station de base selon la revendication 6, dans laquelle :
dans le cas où la station de base est à même de sélectionner (514) une UE configurée arbitraire dans la cellule et de transmettre (511) une autorisation absolue qui a été précédemment transmise à un intervalle de temps de transmission antérieur à la UE sélectionnée ; la station de base étant en outre à même de :
- rechercher (516) si la UE sélectionnée est ou non en transfert doux et, le cas échéant, transmettre (511) une autorisation absolue qui a été précédemment transmise à un intervalle de temps de transmission antérieur à la UE sélectionnée et autrement transmettre (510) une autorisation absolue pour une UE non configurée dans la cellule sur le canal de commande.

8. Station de base selon la revendication 6 ou 7, dans laquelle :
la transmission (510) d'une autorisation absolue pour une UE non configurée dans la cellule ou la transmission (511) d'une autorisation absolue qui a été précédemment transmise à un intervalle de temps de transmission antérieur est :
- effectuée (512) à un niveau de puissance réduit par rapport au niveau de puissance auquel une autorisation absolue (506) programmée (502) est transmise.

9. Station de base selon la revendication 8, dans laquelle le niveau de puissance réduit est d'au moins 2 dB en dessous du niveau auquel une autorisation absolue (506) programmée (502) est transmise.

10. Station de base selon l'une quelconque des revendications 6 à 9, dans laquelle au moins :
- la station de base est à même d'opérer selon l'accès de paquets en liaison montante à grande vitesse HSUPA ;
- la station de base est un noeud B ;
- le canal de commande est un canal dédié renforcé E-DCH, un canal d'autorisation absolue E-AGCH ; et
- la station de base étant à même de transmettre une autorisation absolue pour une UE non configurée dans la cellule correspond à la station de base qui est à même de transmettre une autorisation absolue pour le canal dédié renforcé E-DCH, un identifiant temporaire de réseau radio E-RNTI qui n'est pas affecté à une UE ou à un groupe d'UE quelconque dans la cellule.
